# EUROPEAN PATENT APPLICATION

(11) **EP 4 693 545 A1**
(43) Date of publication of application: **11.02.2026**
(21) Application number: 24898042.7
(22) Date of filing: 25.11.2024
(51) Int. Cl.: H01M 10/04, H01M 10/0585, H01M 50/183, H01M 50/105, H01M 10/0562, H01M 10/44

(54) **ISOSTATIC PRESSURIZATION METHOD AND DEVICE FOR ALL-SOLID-STATE BATTERY, AND BATTERY CELL MODULE COMPRISING ISOSTATIC PRESSURIZATION DEVICE**

(30) Priority: 28.11.2023 KR 20230167871; 20.11.2024 KR 20240166024
(71) Applicant: LG Energy Solution, Ltd., Seoul 07335 (KR)
(72) Inventor: CHOI, Seong Won, Daejeon 34122 (KR); KIM, Yeeun, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2024/018707
(87) International publication number: WO 2025/116447

(57) **Abstract**

An isostatic pressing method for an all-solid-state battery includes: (a) disposing a lower jig with an internal space accommodating a fluid for an isostatic pressing and a pouch cell; (b) mounting and securing a first plate inside the lower jig; (c) accommodating the pouch cell in the opening of the first plate in a state where a cup part faces upward, downward, or both upward and downward directions; (d) stacking a second plate on an upper surface of the first plate, to press and secure a sealing part disposed at an outer periphery of the pouch cell by the second plate, while continuing to expose the cup part in an outward direction; and (e) stacking and securing an upper jig on a top of the lower jig to seal the internal space, and then, injecting the fluid into the internal space to perform an isostatic pressing.

## Description

### CROSS REFERENCES TO RELATED APPLICATIONS

This application is based on and claims priority from Korean Patent Application No. 10-2023-0167871, filed on November 28, 2023, and Korean Patent Application No. 10-2024-0166024, filed on November 20, 2024, with the Korean Intellectual Property Office, the disclosure of which is incorporated herein in its entirety by reference.

### TECHNICAL FIELD

The present disclosure relates to an isostatic pressing method and apparatus for an all-solid-state battery, and a battery cell module including the isostatic pressing apparatus.

### BACKGROUND

As technology development and demand for mobile devices and automobiles are skyrocketing, many studies are being conducted on secondary batteries having a high energy density, high discharge voltage, and excellent output stability. The secondary batteries include, for example, lithium-based secondary batteries such as lithium-sulfur batteries, lithium-ion batteries, and lithium-ion polymer batteries. According to battery shapes, the secondary batteries may be classified into, for example, cylindrical, prismatic, and pouch-type batteries, and especially, pouch-type battery cells are gaining increasing interest and demand. The pouch-type battery cells may be stacked with a high degree of integration, have the high energy density per weight, are inexpensive, and may easily be modified. Thus, the pouch-type battery cells may be manufactured in shapes and sizes which are applicable to various mobile devices and automobiles.

Typically, the pouch-type battery cells have a stacked structure of one or more unit cells each including a positive electrode, a negative electrode, and a separator interposed between the electrodes (*i.e*., an electrode assembly or a stack cell), and may be made into a product by accommodating the electrode assembly in a battery housing, and then, injecting an electrolyte thereinto, or for all-solid-state batteries, providing a solid electrolyte in the electrode assembly from the beginning.

### SUMMARY

Embodiments of the present disclosure provide an isostatic pressing method and apparatus for an all-solid-state battery, which may apply a high pressure regardless of cell sizes, and achieve the increase in operating voltage and the improvement in battery performance, and a battery cell module including the isostatic pressing apparatus.

According to an embodiment of the present disclosure, an isostatic pressing method for an all-solid-state battery includes: (a) disposing a lower jig with an internal space accommodating a fluid for an isostatic pressing and a pouch cell; (b) mounting and securing a first plate having a ring shape with an opening formed at a center thereof, inside the lower jig; (c) accommodating the pouch cell in the opening of the first plate in a state where a cup part of the pouch cell faces upward, downward, or both upward and downward directions; (d) stacking a second plate having a shape corresponding to the first plate on an upper surface of the first plate, to press and secure a sealing part disposed at an outer periphery of the pouch cell by the second plate, while continuing to expose the cup part of the pouch cell in an outward direction; and (e) stacking and securing an upper jig having a plate shape on a top of the lower jig to seal the internal space, and then, injecting the fluid into the internal space to perform an isostatic pressing.

According to an embodiment of the present disclosure, an isostatic pressing apparatus for an all-solid-state battery includes: an isostatic pressing jig including a lower jig with an internal space accommodating a fluid for an isostatic pressing and a pouch cell, and an upper jig airtightly sealing the internal space; and first and second plates having a ring shape, and disposed inside the isostatic pressing jig to secure and press a sealing part disposed at an outermost edge of the pouch cell from below and above, and expose a rest of the pouch cell excluding the sealing part to a fluid.

According to an embodiment of the present disclosure, a battery cell module includes: an isostatic pressing jig including a lower jig with an internal space accommodating a fluid for an isostatic pressing and a pouch cell, and an upper jig airtightly sealing the internal space; first and second plates having a ring shape, and disposed inside the isostatic pressing jig to secure and press a sealing part disposed at an outermost edge of the pouch cell from below and above, and expose a rest of the pouch cell excluding the sealing part to a fluid; and a pouch cell of which sealing part is disposed between the first and second plates, thereby being secured and pressed by the first and second plates.

According to an embodiment of the present disclosure, an automobile includes the battery cell module described above.

In the isostatic pressing method and apparatus for an all-solid-state battery and the battery cell module including the isostatic pressing apparatus according to embodiments of the present disclosure, a relatively high pressure may be applied regardless of cell sizes, and the increase in operating voltage and the improvement in battery performance may be achieved.

### BRIEF DESCRIPTION OF THE DRAWINGS

Since the drawings attached herewith illustrate the embodiments of the present disclosure and serve to facilitate the understanding of the technical idea of the present disclosure in conjunction with the detailed description of the invention herein below, the present disclosure should not be construed as being limited to the matters illustrated in the drawings.
FIG. 1 is an image illustrating a pouch cell being pressed using a uniaxial pressing method.
FIG. 2 is a schematic view illustrating mounting a pouch cell in an isostatic pressing apparatus to isostatically press the pouch cell, according to an embodiment of the present disclosure.
FIG. 3 is a flowchart illustrating a method of mounting a pouch cell in an isostatic pressing apparatus to isostatically press the pouch cell, according to an embodiment of the present disclosure.
FIG. 4 is a schematic view illustrating a stacked structure of an electrode assembly disposed inside a pouch cell to be isostatically pressed, according to an embodiment of the present disclosure.
FIGS. 5A and 5B are schematic views illustrating an example of a pouch cell being isostatically pressed according to an embodiment of the present disclosure.
FIG. 6 is a perspective view illustrating an automobile including a battery pack according to an embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

Accordingly, it can be appreciated that the embodiments described herein and the configurations illustrated in the drawings are merely embodiments of the present disclosure, which do not exhaustively represent the technical idea of the present disclosure, and various equivalents and modifications may be made to substitute the present disclosure at the time of filing the present disclosure.

Further, when describing embodiments of the present disclosure, detailed description of related known configurations or functions art may be omitted if determined to obscure the gist of the present disclosure.

In the descriptions herein, the terms "about," "approximately," and "substantially" are used to describe a range of numerical values or a degree, or an approximation thereto in consideration of inherent manufacturing and material tolerances.

Since the embodiments of the present disclosure are provided to further thoroughly describe the invention to one of ordinary skill in the art to which the present disclosure belongs, for example, shapes and dimensions of the elements in the drawings may be exaggerated, omitted, or schematically illustrated to more clearly describe the invention. Therefore, the size or proportion of each element may not accurately reflect the size or proportion thereof.

All-solid-state batteries refer to batteries manufactured by changing the electrolyte used in common lithium secondary batteries from liquid to solid, and are gaining attraction in the sectors of electric vehicles and mobile devices because they are superior to other types of secondary batteries in terms of safety. For example, the solid-state batteries do not use flammable solvents, and therefore, do not cause ignition or explosion resulting from, for example, the decomposition reaction of electrolyte, which may greatly improve the safety. Further, the all-solid-state batteries are advantageous in that they may use a lithium (Li) metal or Li alloy, instead of graphite or the like, as a negative electrode material, and thus, may improve the energy density relative to the mass and volume of the battery, as compared to the case where the liquid electrolyte is used.

The solid electrolytes of the all-solid-state batteries may be largely classified into organic (polymeric) solid electrolytes such as polymers and inorganic solid electrolytes, and the inorganic solid electrolytes may be classified into sulfide-based solid electrolytes and oxide-based solid electrolytes. Up to now, many technology developments have been progressed on the sulfide-based solid electrolytes, which are inorganic solid electrolytes, and the ionic conductivity of the sulfide-based solid electrolytes has been developed to 10⁻³ S/cm to 10⁻² S/cm, which is a level close to that of the organic electrolytes. As such, among the solid electrolytes, the sulfide-based solid electrolytes not only have the relatively high ionic conductivity, but also have the excellent thermal stability, and furthermore, have a ductility enabling the good interfacial contact (interfacial compatibility), which is advantageous in resistance improvement.

When manufacturing all-solid-state batteries, a pressing process is applied to enhance the contact between the all-solid-state electrolyte and the electrodes, but during the pressing process performed mainly under a high-pressure condition, the edges of the electrodes may detach, resulting in a short circuit in the batteries, which may cause ignition and thermal runaway in the batteries. Thus, it is necessary to manufacture the all-solid-state batteries while ensuring the insulation performance of the edges of the all-solid-state batteries.

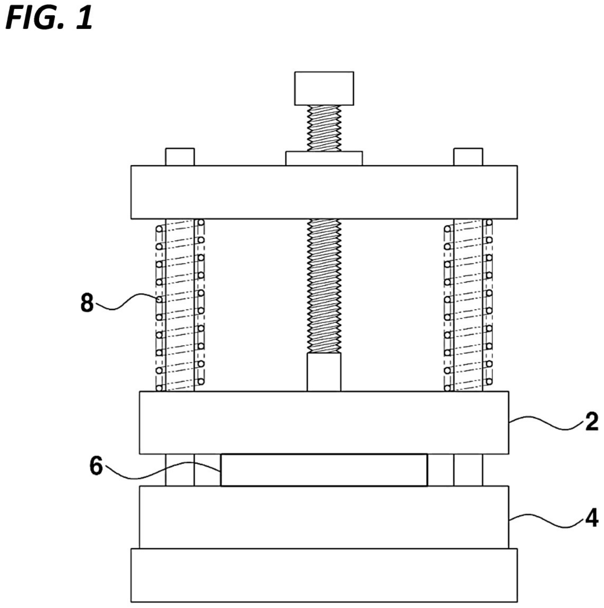

FIG. 1 is a view illustrating a pouch-type all-solid-state battery being pressed by using a uniaxial pressing method. For example, in the all-solid-state battery employing the sulfide-based solid electrolyte, which is the inorganic solid electrolyte, a pressing process is typically performed by applying a high uniaxial pressure using a torque wrench as illustrated in FIG. 1 during a process of activating or driving the cell, for the purpose of minimizing the contact resistance between the individual layers of the cell and the voids at the boundaries of the layers. This is because when a good electrode/solid electrolyte interface is not formed due to a non-ideal contact at the electrode/solid electrolyte interface, the migration of lithium (Li) ions becomes difficult, and as a result, the operation of the battery becomes impossible or the battery performance degrades. In the typical uniaxial pressing method using the torque wrench, a cell 6 is disposed between an upper plate 2 and a lower plate 4, and pressed by moving the upper plate 2 up and down using an elastic member 8 such as a spring. However, in this case, as the size of a cell increases, it becomes difficult or impossible to apply a high pressure to the cell.

The present disclosure provides a novel isostatic pressing method, which does not cause the problems described above even when a high pressure is applied to a relatively large cell, and an isostatic pressing apparatus using the method.

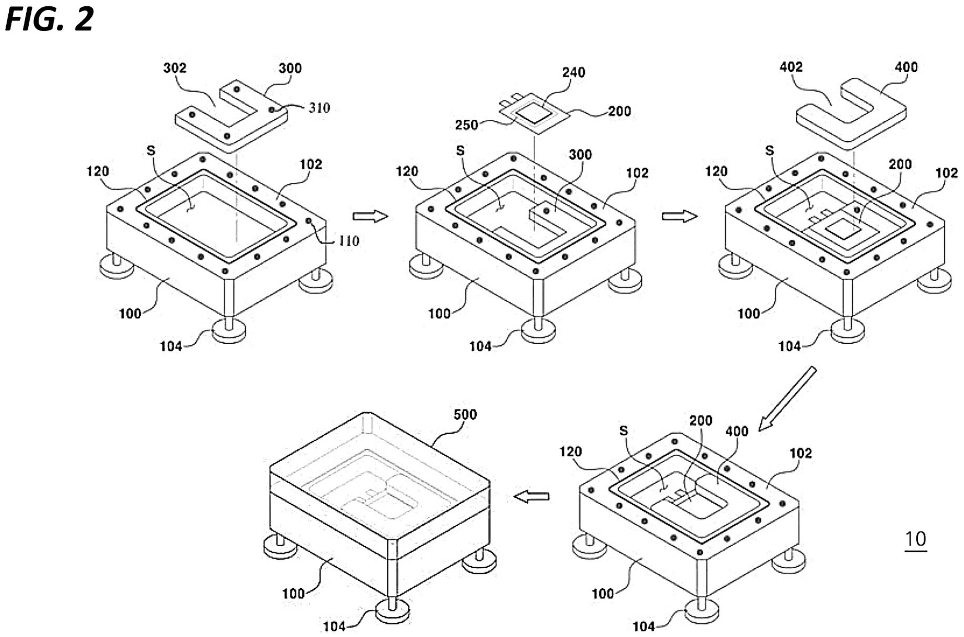

FIG. 2 is a schematic view illustrating mounting a pouch cell in an isostatic pressing apparatus to isostatically press the pouch cell, according to an embodiment of the present disclosure. Referring to FIG. 2, the isostatic pressing apparatus 10 for the all-solid-state battery described above includes an isostatic pressing jig 100, 500 provided with a lower jig 100 having an internal space S that accommodates a fluid for an isostatic pressing and a pouch cell 200, and an upper jig 500 that airtightly seals the internal space S. The isostatic pressing apparatus 10 for the all-solid-state battery also includes first and second plates 300 and 400 each having a ring shape and disposed inside the isostatic pressing jig 100, 500 to secure and press a sealing part 250 disposed at the outermost edge of the pouch cell 200 from below and above, and expose the rest of the pouch cell excluding the sealing part 250 to the fluid.

As illustrated in FIG. 2, the ring-shaped first plate 300 and second plate 400 may include a first opening 302 and a second opening 402, respectively, to each form the shape open at one side. Thus, in this case, of the four faces of the sealing part 250 disposed at the outermost edge of the pouch cell 200, the three faces of the sealing part 250 excluding the face where electrode terminals are disposed may be secured and pressed from below and above by the first and second plates 300 and 400 each having the shape open at one side.

In the upper surface 102 of the lower jig 100, a groove 120 may be formed along the periphery of the internal space S of the lower jig 100 as illustrated in FIG. 2. The groove 120 serves as a means for improving watertightness and airtightness when the upper jig 500 is stacked on the top of the lower jig 100 to seal the internal space S, and the sealing effect may be improved by inserting an elastic ring such as an O-ring along the groove 120, and then, covering the lower jig 100 with the upper jig 500. The configuration of the isostatic pressing apparatus 10 is further described herein below along with the description of an isostatic pressing method for the all-solid-state battery.

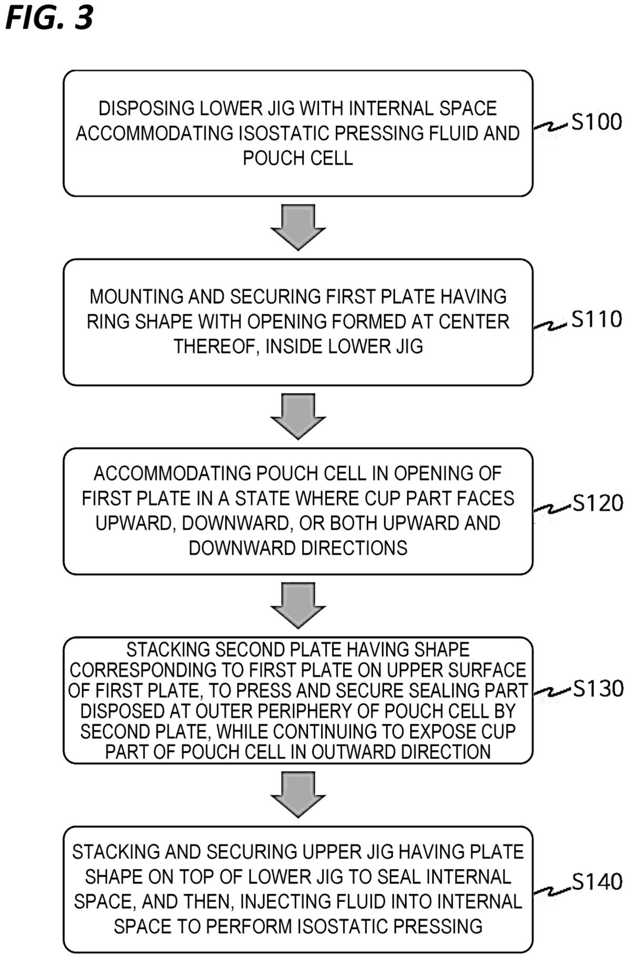

FIG. 3 is a flowchart illustrating a method of mounting the pouch cell in the isostatic pressing apparatus to isostatically press the pouch cell, according to an embodiment of the present disclosure. Referring to FIGS. 2 and 3, the isostatic pressing method for the all-solid-state battery according to the present disclosure includes: (S100) disposing the lower jig 100 having the internal space that accommodates the fluid for the isostatic pressing and the pouch cell, (S110) mounting and securing the first plate 300 having the ring shape with an opening formed at the center thereof inside the lower jig 100; (S120) accommodating the pouch cell 200 in the opening of the first plate 300 in the state where a cup part 240 of the pouch cell 200 faces upward, downward, or both upward and downward directions, (S130) stacking the second plate 400 having the shape corresponding to the first plate 300 on the upper surface of the first plate 300, to press and secure the sealing part 250 disposed at the outer periphery of the pouch cell 200 (or at the outermost edge of the pouch cell in the horizontal direction) with the second plate 400, while continuing to expose the cup part 240 of the pouch cell 200 in the outward direction, and (S140) stacking and securing the upper jig 500 having a plate shape on the top of the lower jig 100 to seal the internal space S, and then, injecting the fluid thereinto to perform the isostatic pressing.

Hereinafter, each step of the isostatic pressing method for the all-solid-state battery according to an embodiment of the present disclosure is described in more detail.

In order to isostatically press the all-solid-state battery according to the present disclosure, first, the lower jig 100 having the internal space S that accommodates the fluid for the isostatic pressing and the pouch cell 200 (alternatively, having the shape in which the outer edge is raised with a relatively higher step to form the internal space S open at the top) is disposed (S100). In the internal space S of the lower jig 100, the pouch cell 200 and the members such as the first plate 300 and the second plate 400 for stably positioning and securing the pouch cell 200 inside the lower jig 100 are provided.

While FIG. 2 illustrates one pouch cell 200, one first plate 300, and one second plate 400 for the convenience of description, the number of pouch cells and plates provided inside the lower jig 100 is not particularly limited. For example, in another embodiment of the present disclosure, two or more pouch cells 200 may be provided in the internal space S of the lower jig 100 to perform the isostatic pressing simultaneously. For example, a second pouch cell, and a third plate (corresponding to the first plate) and a fourth plate (corresponding to the second plate) for securing the second pouch cell may be further provided on the top of the second plate 400 (the stacking order is the same as in FIGS. 2 and 3). When two or more pouch cells are provided in the internal space S of the lower jig 100, a pair of plates corresponding to the first plate 300 and the second plate 400 may be further provided on the top of the second plate 400. Further, the number of pouch cells and plates may vary according to the size of the internal space S of the lower jig 100.

As illustrated in FIG. 2, the outer edge of the lower jig 100 may be formed having an upper surface with a predetermined width, so that the upper jig 500 may be stacked and secured stably. At the upper surface 102 of the lower jig 100, screw grooves 110 may be formed as illustrated in FIG. 2, such that the lower jig 100 may be screwed with the upper jig 500. This configuration is merely an example, and the method of securing the lower jig 100 and the upper jig 500 to each other is not particularly limited as long as the lower jig 100 and the upper jig 500 may be stably secured. Further, as illustrated in FIG. 2, two or more, for example, four or more support members 104 for a positioning and shock mitigation may be provided on the bottom surface of the lower jig 100.

In the embodiment of FIG. 2, the lower jig 100 has the hexahedron shape. However, this configuration is intended merely for the convenience of description, and the shape of the lower jig 100 is not particularly limited as long as the pouch cell 200 and the plates 300 and 400 may be mounted in the lower jig 100, and the pouch cell 200 may be stably isostatically pressed. Further, the width or height of the lower jig 100 or the internal space S formed in the lower jig 100 also is not particularly limited, and may vary according to the size or number of pouch cells.

After disposing the lower jig 100 as described above, steps S110 and S120 are performed sequentially. In step S110, the first plate 300 having the ring shape with an opening formed at the center thereof is mounted and secured inside the lower jig 100. In step S120, the pouch cell is accommodated in the opening of the first plate in the state where the cup part faces upward, downward, or both upward and downward directions.

The first plate 300 may have the ring shape including a first opening 302 such that the cup part 240 of the pouch cell 200 may be accommodated in the first opening 302, and the sealing part 250 disposed at the outermost edge of the pouch cell 200 in the horizontal direction may be positioned on the upper surface of the first plate 300. Thus, in this case, the first plate 300 and the second plate 400 secure and press the sealing part 250 of the pouch cell 200 from below and above, and the rest of the pouch cell 200 excluding the sealing part 250 (*e.g*., the cup part and the portion on the opposite side thereto) are exposed to the fluid and isostatically pressed.

As described above, the ring-shaped first plate 300 and second plate 400 may each have the shape open at one side by the first opening 302 and the second opening 402, respectively. Thus, in this case, of the four faces of the sealing part 250 disposed at the outermost edge of the pouch cell 200, the three faces of the sealing part 250 excluding the face where electrode terminals are disposed may be secured and pressed from below and above by the first and second plates 300 and 400 each having the shape open at one side.

The first plate 300 may be secured to the floor surface of the internal space S of the lower jig 100 by, for example, screwing, in order to support the pouch cell 200 and prevent the separation of the pouch cell 200. Further, as illustrated in FIG. 2, the outer peripheral surfaces of the first plate 300 other than the side of the first opening 302 may be positioned in close contact with one end of the internal space S of the lower jig 100, so that the pouch cell 200 may be more stably supported and secured.

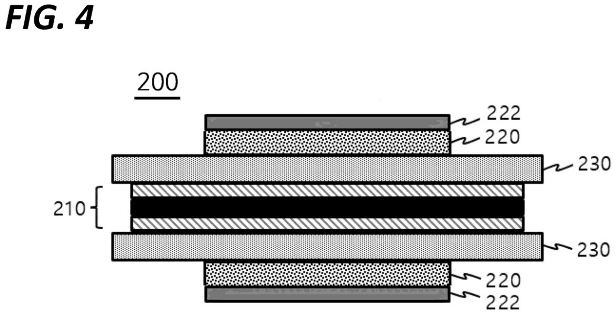

FIG. 4 is a schematic view illustrating a stacked structure of an electrode assembly disposed inside the pouch cell 200 to be isostatically pressed, according to an embodiment of the present disclosure. The pouch cell 200 may be a typical pouch cell, in which a pouch covers a mono-cell obtained by sequentially stacking a solid electrolyte 230 and a positive electrode (or a positive electrode including no collector 222 or a freestanding positive electrode 220) on one side of a negative electrode 210. Alternatively, as illustrated in FIG. 4, the pouch cell 200 may be a typical pouch cell, in which a pouch covers a bi-cell obtained by sequentially stacking the solid electrolyte 230 and the positive electrode (or the positive electrode including no collector 222 or the freestanding positive 220) on each of both sides of the negative electrode 210. Further, the pouch cell 200 may have the structure of bi-cell or larger, or may include a cell with a different stacked structure of the electrodes and the electrolyte.

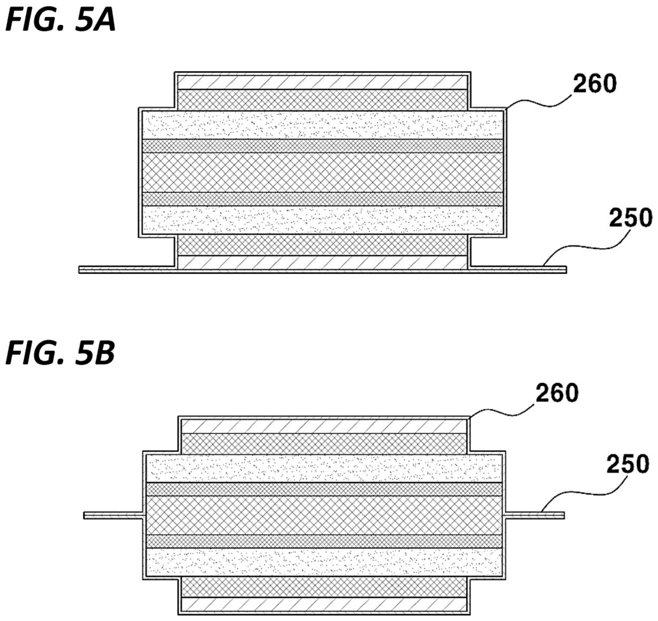

As described above, the electrode assembly such as the mono-cell or the bi-cell is accommodated in the pouch cell 200, and the edge part formed by sealing the pouch enclosing the electrode assembly is referred to as a sealing part. The remaining part other than the sealing part, for example, the protruding part relative to the sealing part is referred to as the cup part. FIGS. 5A and 5B are schematic views illustrating an example of a pouch cell being isostatically pressed according to an embodiment of the present disclosure. In the pouch cell 200 of the present disclosure, the sealing part 250 of a pouch 260 may be disposed at the outermost side (FIG. 5A), at the center (FIG. 5B), or at any position between the outermost side and the center, in the stacking direction of the cell, that is, the position of the sealing part 250 is not particularly limited.

To further describe step S120, from the viewpoint of performing a uniform pressing, the pouch cell 200 needs to be accommodated in the opening of the first plate 300 in the state where the cup part 240 faces upward, downward, or both upward and downward directions as illustrated in FIG. 2. The state where the cup part 240 faces upward or downward corresponds to the pouch cell of which sealing part 250 is disposed at the outermost side in the stacking direction of the cell, as illustrated in FIG. 5A. Further, the state where the cup part 240 faces both directions (e.g., upward and downward) corresponds to the pouch cell of which sealing part 250 is disposed at the center or any position between the outermost side and the center in the stacking direction of the cell, as illustrated in FIG. 5B.

In the state where the pouch cell 200 is accommodated in the first opening 302 of the first plate 300, both the cup part 240 and the sealing part 250 of the pouch cell 200 may be exposed to the outside as illustrated in FIG. 2. At this time, the sealing part 250 of the pouch cell 200 may be stably positioned on the upper surface of the first plate 300, to be supported by the upper surface of the first plate 300. Accordingly, the height of the upper surface of the sealing part 250 disposed at the outer periphery of the cup part 240 of the pouch cell 200 may be higher than the height of the upper surface of the first plate 300. However, as long as the sealing part 250 is supported by the first plate 300, the height of the upper surface of the sealing part 250 of the pouch cell 200 may be the same as the height of the upper surface of the first plate 300. Meanwhile, when the height of the upper surface of the sealing part 250 of the pouch cell 200 is lower than the height of the upper surface of the first plate 300, the sealing part may not be pressed by the second plate 400. Therefore, the height of the upper surface of the sealing part 250 of the pouch cell 200 may be equal to or higher than the height of the upper surface of the first plate 300.

Next, after the first plate 300 is mounted and secured inside the lower jig 100, and then, the pouch cell 200 is accommodated in the opening of the first plate 300 as described above, the step is performed, which stacks the second plate 400 having the shape corresponding to the first plate 300 on the upper surface of the first plate 300 (S130).

The second plate 400 is a member for pressing and securing the sealing part 250 disposed at the outer periphery of the pouch cell 200 (or at the outermost edge in the horizontal direction of the pouch cell).

According to an embodiment, the opening of the second plate 400 may overlap with the opening of the first plate 300. As a result, the sealing part 250 may be secured and pressed from below and above with uniform pressure. Thus, the lower surface of the second plate 400 necessarily comes into contact with the sealing part 250 of the pouch cell 200, and in this state, the second plate 400 is coupled to the first plate 300, thereby pressing the sealing part 250. That is, the sealing part 250 of the pouch cell 200 interposed between the upper surface of the first plate 300 and the lower surface of the second plate 400 may be pressed. The cup part 240 of the pouch cell 200 needs to be kept in the state of being exposed to the outside (in order to perform the isostatic pressing in the last step).

The second plate 400 may be coupled to the top of the first plate 300 using coupling means such as screws, or may be attached to the top of the first plate 300 using an easily removable adhesive. In consideration of the convenience for repeated operations, the first plate 300 and the second plate 400 may be coupled and secured to each other using screws and bolts after forming screw grooves in each of the first plate 300 and the second plate 400 (*e.g*., screw grooves 310 of the first plate 300; the screw grooves of the second plate 400 are not illustrated).

As illustrated in FIG. 2, the upper surface of the second plate 400 may be positioned at the same height as the upper surface 102 of the lower jig 100 in the vertical direction, or higher than the upper surface 102 of the lower jig 100. In this case, since the lower surface of the upper jig 500 and the upper surface of the second plate 400 come into contact with each other, the sealing part 250 of the pouch cell 200 may be further pressed when the upper jig 500 is secured to the upper surface of the lower jig 100. With this configuration, the pouch cell may be more thoroughly secured during the isostatic pressing.

After the second plate 400 is stacked on the upper surface of the first plate 300 in the state where the sealing part 250 is interposed therebetween as described above, the step is performed, which stacks and secures the upper jig 500 having the plate shape on the top of the lower jig 100 to seals the internal space S, and then, injects the fluid (for isostatic pressing) thereinto to perform the isostatic pressing (S140). The type of fluid (for isostatic pressing) is not particularly limited.

According to an embodiment, the upper jig 500 may be coupled to the top of the lower jig 100 using coupling means such as screws, or may be attached thereto using an adhesive that has the superior watertightness and airtightness and is easily removable. Alternatively, the lower jig 100 and the upper jig 500 may be tied together with a string or an elastic band, and the coupling method is not particularly limited as long as the upper jig 500 is not detached from the lower jig 100. In consideration of the convenience for repeated operations, screw grooves (*e*.*g*., the screw grooves 110) may be formed in each of the lower jig 100 and the upper jig 500, and the lower and upper jigs 100 and 500 may be coupled and secured to each other using screws and bolts. Further, the elastic ring described above may be inserted into the groove 120 formed at the upper surface 102 of the lower jig 100, so that the watertightness and the airtightness may be further enhanced. Meanwhile, the dimension of the upper jig 500 is not particularly limited as long as the isostatic pressing is not adversely affected, for example, the isostatic pressing fluid injected into the internal space S does not leak out.

The isostatic pressing may be any method selected from the group including a warm isostatic pressing (WIP), a hot isostatic pressing (HIP), and a cold isostatic pressing (CIP). The isostatic pressing may be performed at a temperature within an appropriate range in which the materials making up the electrodes are thermally stable while maintaining the good interfacial contact between the electrodes by the molding of the solid electrolyte. For example, the warm isobaric pressing (WIP) may be performed at about 45 °C to 100 °C.

Meanwhile, each of the lower jig 100 and the upper jig 500 may be formed of a material that has no or very few pores. In particular, this is because a crack phenomenon may occur during the isostatic pressing when the jigs 100 and 500 have pores (voids). Thus, the porosity of each of the lower jig 100 and the upper jig 500 may be less than about 1 %, for example, less than about 0.5 %, or less than about 0.1 %. For example, each of the lower jig 100 and the upper jig 500 may be formed of a steel or ceramic, but is not limited thereto. Further, the lower jig 100 and the upper jig 500 may be formed of the same material or different materials, and the materials of the jigs 100 and 500 are not particularly limited. Further, the plate members such as the first plate 300 and the second plate 400 provided in the internal space S of the lower jig 100 may also be formed of a material having the same porosity as that described above, but the materials of the plate members are not limited thereto.

In the all-solid-state battery used in the present disclosure, the positive electrode may include a positive electrode active material, a conductive agent, and a binder in a granular form. Among the components, the positive electrode active material may be any material usable as a positive electrode active material for the all-solid-state battery. The positive electrode active material may be a lithium transition metal oxide including one or more transition metals. For example, the positive electrode active material may be selected from the group including LiCoO₂, LiNiO₂, LiMnO₂, Li₂MnO₃ LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂, LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

The binder is mixed with the positive electrode active material and the conductive agent that are powdery particles, to bind the components together and aid in the growth of the particles. For example, since the sulfide-based solid electrolyte has the moisture-sensitive property, for example, generating H₂S gas when being in contact with moisture, the moisture needs to be removed as much as possible from the time of forming the granules. The binder may be an organic binder, which indicates a binder soluble or dispersible in an organic solvent, in particular, N-methylpyrrolidone (NMP), and is distinguished from an aqueous binder using water as a solvent or a dispersion medium. For example, the binder may be selected from the group including polyvinylidene fluoride (PVDF), polyvinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrenebutadiene rubber, and fluororubber, but is not limited thereto.

In the all-solid-state battery, the solid electrolyte may include one or more selected from a sulfide-based solid electrolyte, a polymer-based solid electrolyte, and an oxide-based solid electrolyte, or may include only a sulfide-based solid electrolyte according to an embodiment. The sulfide-based solid electrolyte may include a lithium salt, and the lithium salt is an ionizable lithium salt and may be represented by Li⁺X⁻. The negative ions of the lithium salt are not particularly limited, but may include, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Further, the sulfide-based solid electrolyte may include a Li-P-S-based glass or a Li-P-S-based glass-ceramic, which contains sulfur (S) and has the ionic conductivity of a metal belonging to Group I or II of the periodic table. Non-limiting examples of the sulfide-based solid electrolyte include Li₂S-P₂S₃, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and the sulfide-based solid electrolyte may include one or more of the materials above.

The solid electrolyte may also serve as a separator in a typical lithium secondary battery (*i.e*., serving as a passage of lithium ions while electrically insulting the negative and positive electrodes). Meanwhile, the all-solid-state battery may be utilized as a semi-solid-state battery by also including a liquid electrolyte as needed, and in this case, an additional polymeric separator may be required.

In the all-solid-state battery, the negative electrode may include a negative electrode active material usable in typical all-solid-state batteries. For example, the negative electrode active material may include one or more selected from, for example, carbon such as hard carbon and graphitized carbon; metal complex oxides such as LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si; the elements of Groups 1, 2, and 3 of the periodic table; halogens; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni based materials; titanium oxides; and lithium titanium oxides.

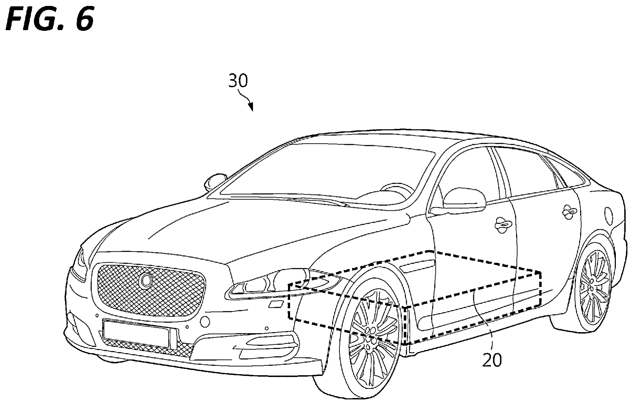

FIG. 6 is a schematic perspective view of an automobile 30 including a battery pack 20 according to an embodiment of the present disclosure.

Referring to FIG. 6, the present disclosure provides a battery module including the all-solid-state battery described above as a unit cell, the battery pack 20 including the battery module, and a device including the battery pack as a power source.

Examples of the device include power tools powered by an electric motor; electric vehicles (EVs) including hybrid electric vehicles (HEVs) and plug-in hybrid electric vehicles (PHEVs); electric two-wheeled vehicles including electric bicycles (E-bikes) and electric scooters (E-scooters); electric golf carts; and power storage systems, but are not limited thereto. For example, the automobile 30 may be powered by the battery pack 20 according to an embodiment of the present disclosure.

Further, the present disclosure provides a battery cell module including the above-described isostatic pressing apparatus for the all-solid-state battery and a battery cell mounted in the isostatic pressing apparatus, in an integrated form.

The battery cell module includes: the isostatic pressing jig 100, 500 including the lower jig 100 with the internal space S accommodating the fluid for the isostatic pressing and the pouch cell 200, and the upper jig 500 airtightly sealing the internal space S; the first and second plates 300 and 400 having a ring shape and disposed inside the isostatic pressing jig 100, 500 to secure and press the sealing part 250 disposed at the outermost edge of the pouch cell 250 from below and above, and expose the rest of the pouch cell excluding the sealing part 250 to the fluid; and the pouch cell 200 of which sealing part 250 is disposed between the first and second plates 300 and 400, thereby being secured and pressed by the first and second plates 300 and 400.

Since the isostatic pressing apparatus 10 for the all-solid-state battery described above is provided in the state where the battery cell is removed, the apparatus may be used not only in the process of activating the battery cell, but also in the cell manufacturing step prior to the activating process.

Meanwhile, when the battery cell module is provided including the pouch cell 200 in an integrated form in the above-described isostatic pressing apparatus 10 for the all-solid-state battery, the battery cell module may be applied not only to the process of activating the battery cell, but also may be provided in a product such as an automobile itself, so that the isostatic pressing of the battery cell may be relatively easily performed even during the operation of the battery. Even when the isostatic pressing is performed in the process of manufacturing or activating the battery cell, the contact resistance between the individual layers of the cell may increase, and voids may be formed again at the boundaries of the layers, as time elapses or charge/discharge are repeated. However, when the module form described above is provided in a product, the isostatic pressing is performed even during the charge/discharge of the battery, and therefore, the problems described above may be eliminated or minimized. Further, since the uniaxial pressing is not performed, the battery performance does not degrade even when the driving voltage of the battery increases. Referring to FIG. 6, instead of the battery pack 20, the battery cell module described above may be provided in the automobile 30 according to an embodiment of the present disclosure. In this case, the automobile 30 may be powered by the battery cell module, instead of the battery pack 20.

Further, in the present disclosure, two or more pouch cells 200 may be provided in the internal space S of the lower jig 100, and the isostatic pressing may be performed simultaneously. In this case, for example, a second pouch cell, and a third plate (corresponding to the first plate) and a fourth plate (corresponding to the second plate) for securing the second pouch may be further provided on the top of the second plate 400 (the stacking order is the same as in FIGS. 2 and 3). For example, when two or more pouch cells are provided in the internal space S of the lower jig 100, a pair of plates corresponding to the first plate 300 and the second plate 400 may be further provided on the top of the second plate 400. The number of pouch cells and plates may vary according to the size of the internal space S of the lower jig 100. Thus, when a battery cell module including a plurality of cells in an integrated form with the isostatic pressing apparatus is provided in a product, a large-capacity battery may be implemented.

Hereinafter, Examples are described for the purpose of facilitating the understanding of the present disclosure, but are merely examples of the present disclosure. It is apparent to those skilled in the art that various changes and modifications may be made within the scope and the technical idea of the present disclosure, and it is also obvious that the changes and modifications fall within the scope of the claims attached herewith.

### [Example 1] Isostatic Pressing of All-Solid-State Battery

First, the lower jig is disposed, which has the shape where the outer edge is raised with a relatively high step to form the internal space open at the top, and then, the first plate open at one side thereof along the shape of the pouch cell is mounted and secured inside the lower jig. Then, the pouch cell is accommodated in the opening of the first plate, and the second plate having the shape corresponding to the first plate is stacked on the upper surface of the first plate, to press and secure the sealing part disposed at the outer periphery of the pouch cell by the second plate, while continuing to expose the cup part of the pouch cell in the outward direction. Then, the upper jig having the plate shape is stacked and secured on the top of the lower jig to seal the internal space, and the fluid is injected thereinto to perform the warm isostatic pressing (WIP) during the operation of the battery (or during the charge and discharge). Meanwhile, each of the lower jig, the first plate, the second plate, and the upper jig is formed of a steel material with a porosity of less than 1 %.

### [Example 2] Isostatic Pressing of All-Solid-State Battery

The same process is performed as in Example 1 above, except that a groove is formed on the upper end surface of the lower jig, and an elastic ring is fit into the groove.

### [Comparative Example 1] Uniaxial Pressing of All-Solid-State Battery

As illustrated in FIG. 1, a cell is pressed during the operation of the battery (or during the charge and discharge) by performing a typical process of applying a high uniaxial pressure using a torque wrench.

### [Experimental Example 1] Performance Evaluation of Pressed Cell

In Examples 1 and 2 and Comparative Example 1, the performance of the cell pressed during the operation of the battery (or during the charge and discharge) was evaluated. As a result, in Examples 1 and 2 where the pouch cell was isostatically pressed using the jigs and the plates of the present disclosure, no problem occurred in the operation of the battery even when the high pressure was applied during the operation or the charge and discharge of the battery, and further, the battery performance did not degrade. Meanwhile, in Comparative Example 1 where the high uniaxial pressure was applied to the cell using the torque wrench, for example, fractures or cracks occurred in the cell due to the increased pressure during the operation or the charge and discharge of the battery, and as a result, the operation of the battery itself was impossible.

### [Description of Reference Numbers]

100: lower jig (S: internal space, 102: upper surface, 104: support member, 110: screw groove, 120: groove)
200: pouch cell (210: negative electrode, 220: positive electrode, 230:
electrolyte, 240: cup part, 250: sealing part, 260:pouch)
300: first plate (302: first opening, 310: screw groove)
400: second plate (402: second opening)
500: upper jig

## Claims

1. An isostatic pressing method for an all-solid-state battery, comprising:
(a) disposing a lower jig with an internal space accommodating a fluid for an isostatic pressing and a pouch cell;
(b) mounting and securing a first plate having a ring shape with an opening formed at a center thereof, inside the lower jig;
(c) accommodating the pouch cell in the opening of the first plate in a state where a cup part of the pouch cell faces upward, downward, or both upward and downward directions;
(d) stacking a second plate having a shape corresponding to the first plate on an upper surface of the first plate, to press and secure a sealing part disposed at an outer periphery of the pouch cell by the second plate, while continuing to expose the cup part of the pouch cell in an outward direction; and
(e) stacking and securing an upper jig having a plate shape on a top of the lower jig to seal the internal space, and then, injecting the fluid into the internal space to perform an isostatic pressing.

2. The isostatic pressing method for the all-solid-state battery according to claim 1, wherein the sealing part of the pouch cell is positioned on and supported by the upper surface of the first plate.

3. The isostatic pressing method for the all-solid-state battery according to claim 2, wherein a lower surface of the second plate comes into contact with the sealing part of the pouch cell, and in this state, the second plate is coupled to the first plate, to press the sealing part of the pouch cell interposed between the upper surface of the first plate and the lower surface of the second plate.

4. The isostatic pressing method for the all-solid-state battery according to claim 1, wherein an upper surface height of the sealing part of the pouch cell accommodated in the opening of the first plate is equal to or higher than an upper surface height of the first plate.

5. The isostatic pressing method for the all-solid-state battery according to claim 1, wherein an upper surface of the second plate is positioned at a same height or higher than an upper surface of the lower jig in a vertical direction.

6. The isostatic pressing method for the all-solid-state battery according to claim 5, wherein when a lower surface of the upper jig and an upper surface of the second plate come into contact with each other, and the upper jig is secured on the upper surface of the lower jig, the sealing part of the pouch cell is further pressed.

7. The isostatic pressing method for the all-solid-state battery according to claim 1, wherein each of the first and second plates having the ring shape is open at one side, and of four faces of the sealing part disposed at an outermost edge of the pouch cell in a horizontal direction, three faces of the sealing part excluding a face where electrode terminals are disposed are secured and pressed from below and above.

8. The isostatic pressing method for the all-solid-state battery according to claim 1, wherein two or more pouch cells are provided in the internal space of the lower jig.

9. The isostatic pressing method for the all-solid-state battery according to claim 8, wherein a pair of plates corresponding to the first plate and the second plate is further provided on a top of the second plate.

10. The isostatic pressing method for the all-solid-state battery according to claim 1, wherein each of the lower jig, the first plate, the second plate, and the upper jig is formed of either material of a steel and a ceramic having a porosity of less than 1 %.

11. The isostatic pressing method for the all-solid-state battery according to claim 1, wherein the pouch cell includes a structure of a mono-cell or bi-cell or larger.

12. The isostatic pressing method for the all-solid-state battery according to claim 1, wherein the all-solid-state battery is a sulfide-based all-solid-state battery.

13. An isostatic pressing apparatus for an all-solid-state battery, comprising:
an isostatic pressing jig including a lower jig with an internal space accommodating a fluid for an isostatic pressing and a pouch cell, and an upper jig airtightly sealing the internal space; and
first and second plates having a ring shape, and disposed inside the isostatic pressing jig to secure and press a sealing part disposed at an outermost edge of the pouch cell from below and above, and expose a rest of the pouch cell excluding the sealing part to a fluid.

14. The isostatic pressing apparatus for an all-solid-state battery according to claim 13, wherein each of the first and second plates having the ring shape is open at one side, and of four faces of the sealing part disposed at an outermost edge of the pouch cell in a horizontal direction, three faces of the sealing part excluding a face where electrode terminals are disposed are secured and pressed from below and above.

15. A battery cell module comprising:
an isostatic pressing jig including a lower jig with an internal space accommodating a fluid for an isostatic pressing and a pouch cell, and an upper jig airtightly sealing the internal space;
first and second plates having a ring shape, and disposed inside the isostatic pressing jig to secure and press a sealing part disposed at an outermost edge of the pouch cell from below and above, and expose a rest of the pouch cell excluding the sealing part to a fluid; and
a pouch cell of which sealing part is disposed between the first and second plates, thereby being secured and pressed by the first and second plates.

16. The battery cell module according to claim 15, wherein two or more pouch cells are provided in the internal space of the lower jig, and a pair of plates corresponding to the first plate and the second plate is further provided on a top of the second plate.

17. The battery cell module according to claim 15, wherein the battery cell module is applied to a process of activating a battery cell or provided in a product, and when the battery cell module is provided in a product, an isostatic pressing is performed even during charge and discharge of a battery.

18. An automobile comprising the battery cell module according to claim 15.
